# EUROPÄISCHE PATENTANMELDUNG

(11) **EP 0 547 266 A1**
(43) Veröffentlichungstag der Anmeldung: **23.06.1993**
(21) Anmeldenummer: 91121813.9
(22) Anmeldetag: 19.12.1991
(51) Int. Cl.: B64C 1/00, B64D 33/02

(54) **Defence Fighter (DF 2000) Konfiguration mit definierter Zuordnung von den Triebwerks-Rückeneinläufen seitlich am Rumpf hinter dem Cockpit über dem Flügel mit den Canards als zusätzliche Luftleitflächen für die Triebwerkszuluft**

(71) Anmelder: Regnat, Karl, D-85635 Höhenkirchen-Siegertbrn (DE)
(72) Erfinder: Regnat, Karl, D-85635 Höhenkirchen-Siegertbrn (DE)

(57) **Zusammenfassung**

Die Triebwerkseinläufe (1) sind seitl. am Rumpf (4) hinter dem Cockpit (7) über dem Flügel (5) mit einer Grenzschichtfalle (6) umgeben, angeordnet, wobei der Abstand der Einlaufnase zur Flügelvorderkante und zur Canardendkante ebenso die Högenlage den airodynamischen Erfordernissen entspricht. Der Querschnitt (10) der Triebwerkseinläufe entspricht einem verschobenen Viereck wobei die erzielten schrägen Flächen zur Radarabsorption dienen.

## Beschreibung

Defence Fighter(DF 2000)Konfiguration mit definierter Zuordnung von den Triebwerks-Rückeneinläufen seitlich am Rumpf über dem Flügel und den Canards nach Anlage 1 BL. 4

### 1 Ziel, Aufgabe, Bestandteile

Das Ziel dieser Konfiguration sind einfache, kurze und von Einbauten möglichst unabhängige Rückeneinläufe seitlich am Rumpf über dem Flügel wobei die Canards so angeordnet sind, daß diese für hohe Flugzeuganstellwinkel als Leitfläche für die Triebwerkzuluft dienen.

### 2 Beschreibung

Wie auf Anlage 1 Bl. 4 gezeigt, sind die Triebwerkseinläufe seitl. am Rumpf hinter dem Cockpit über dem Flügel mit einer Grenzschichtfalle umgeben angeordnet, wobei der Anstand der Einlaufnase zur Flügelvorderkante und zur Canardendkante ebenso die Höhenlage den airodynamischen Erfordernissen entspricht.

Der Querschnitt der Triebwerkseinläufe entspricht einem verschobenen Viereck wobei die erzielten schrägen Flächen zur Radarabsorption dienen.

Die Canards sind hinter dem ersten Pilotensitz angeordnet wobei die Höhenlage etwa der unteren Triebwerks-Einlaufebene entspricht.

Die Flügelhöhenlage sowie die Nasenausbildung entspricht ebenso den airodynamischen Erfordernissen, wobei die Flügeloberfläche die untere Begrenzung der Grenzschichtfalle bildet.

### Vorteile dieser Konfiguration mit Rückeneinlauf und Canards gegenüber bereits bekannten Typen wie EFA, Rafale und YF22 sind:

Bis zu 2,5m verkürzte und 500kg leichtere Triebwerks-Einläufe.

Geringere Enddeckbarkeit mit vorwiegend schrägen, Triebwerks-Einlauf und Rumpfflächen.

Bessere Installation der Fahrwerke und sonstiger Ausrüstungseinbauten.

Erweiterte und zusammenhängende Rumpftankbehälter.

Bessere Flügeldurchführung und Rumpfbehängungsmöglichkeiten.

Geringere Standhöhe und verminderte Fahrwerksbelastung.

Bessere Systemdurchrührungen und Platzierungen.

Geringerer Rumpfquerschnitt, weniger Stirnwiderstand.

Weniger Verschmutzung und Reibungsverluste der Triebwerkszuluft.

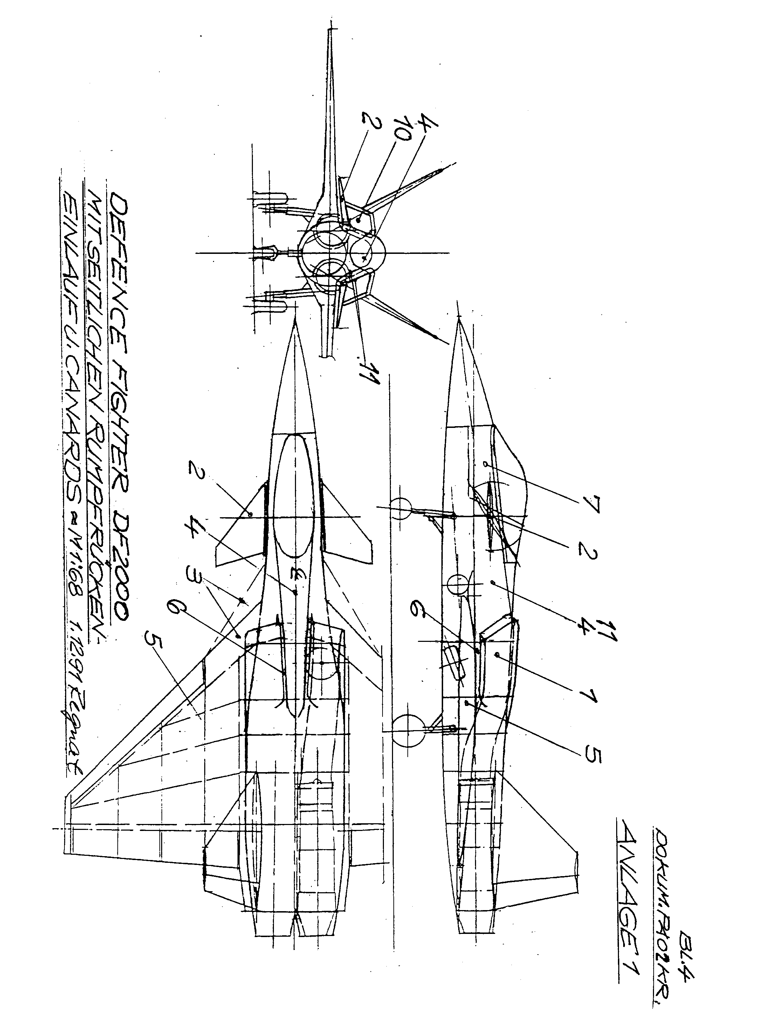

## Patentansprüche

Die auf Anlage (1) dazgestellte Konfiguration mit Rückeneinläufen (1) seitl. am Rumpf (4) über den Flügel (3) mit Canards (2) auch als Luftleitfläche für die Triebwerk-Zuluft ist durch folgende Hauptmerkmale gekennzeichnet.

1. Die Triebwerkseinläufe (1) sind seitl. am Rumpf hinter dem Cockpit (7) über dem Flügel (5) mit Grenzschichtfalle (6) angeordnet.

2. Die Triebwerks-Einläufe (1) haben ein verschobenes Viereck als Querschnittsfläche (10), wobei diese parallel an die Rumpfschräge (11) der Grenzschichtfalle (6) angebracht sind und nach hinten in den Rumpfstrak übergehen.

3. Die Canards (2) sind hinter dem Cockpit (7) (erster Pilotensitz) angeordnet und haben eine definierte Zuordnung zum Triebwerks-Einlauf (1) und Flügelnase (3), sodaß diese auch als Luftleitflächen für den Triebwerkseinlauf (Zuluft) (1) dienen.

4. Diese Anordnung findet Anwendung für Ein-und Doppelsitzer-, sowie für Ein-, und Zweitriebwerksfighter - Konfigurationen.

Geänderte Patentabsprüche gemäss Regel 86-(2) EPÜ.

1. Defence - Fighterkonfiguration mit seitlich am Rumpf (4) über dem Flügel (5) hinter dem Cockpit (7) liegenden und mit einer Grenzschichtfalle (6) umgebenen Triebwerkseinläufen (1) und im Zusammenhang mit der Lage der Canards (2) seitlich am Cockpit (7) hinter dem ersten Pilotensitz am Cockpitspant (12) gelagert eine Flugeinheit bildet ist dadurch gekennzeichnet, daß die Canards (2) hinter dem (ersten) Pilotensitz seitlich am Cockpit (7) bei Spant (12) in der Längs- und Höhenlage zur Triebwerkseinlaufnase (8) und zur Flügelnase (3) so positioniert und gelagert sind,sodaß diese Steuerflächen (2) gleichzeitig als Luftleitflächen, bei Erhöhung des Fluganstellwinkels, für die Triebwerkszuluft dienen.

2. Fighterkonfiguration nach Anspruch 1, dadurch gekennzeichnet, daß die Triebwerkseinläufe (1) an der Rumpfschrägwand (11) und über der Oberfläche des Flügels (5) hinter dem Cockpit (7) so angeordnet sind,sodaß diese Flächen mit den Außenflächen der Triebwerkseinläufe (1) bei einem gewissen Abstand zueinander die umlaufende Grenzschichtfalle (6) bilden, welche nach hinten in den Strak des Rumpfes (4) einmünden.

3. Fighterkonfiguration nach Anspruch 1, dadurch gekennzeichnet, daß die Triebwerkseinläufe (1) hinter dem Cockpit (7) mit der sich nach hinten verjüngenden Rumpfschrägwand (11) in die Form des Rumpfes (4) eintaucht und dabei die Flugzeugstirnfläche verringert wird.

4. Fighterkonfiguration nach Anspruch 1, dadurch gekennzeichnet, daß der Querschnitt (10) der Triebwerkseinläufe (1) durch die Schräge der Rumpfseitenwand (11) und der Oberfläche des Flügels (5) angepaßt ein verschobenes Viereck darstellt und und schräge Außenflächen für die Radarabsorbtion erzeugt.
